# EUROPEAN PATENT SPECIFICATION

(11) **EP 3 504 383 B1**
(45) Date of publication and mention of the grant of the patent: **11.11.2020**
(21) Application number: 17777984.0
(22) Date of filing: 23.08.2017
(51) Int. Cl.: E04D 13/04

(54) **DEVICE FOR ADJUSTMENT OF WATER-FLOW AND WATER-DRAINAGE FROM ROOFS WITH FLAT OR LOW-SLOPED STRUCTURE**
ANORDNUNG ZUR REGULIERUNG DES WASSERFLUSSES UND WASSERDRAINAGE VON FLACHDÄCHERN
DISPOSITIF POUR LE REGLAGE D'ECOULEMENT D'EAU DE DRAINAGE D'EAU D'UNE TOITURE SANS PENTE

(30) Priority: 23.08.2016 NO 20161342
(43) Date of publication of application: 03.07.2019
(73) Proprietor: Protan AS, 3002 Drammen (NO)
(72) Inventor: HAUGERUD, Olav, 3303 HOKKSUND (NO)
(74) Representative: Oslo Patentkontor AS
(86) International application number: PCT/NO2017/050208
(87) International publication number: WO 2018/038619

(56) References cited:
- EP-A1- 1 001 107
- GB-A- 936 687

## Description

### Introduction

The present invention concerns a system for reducing the draining and increasing the water-holding capacity of roofs with no or little slope of the roof surface or structure, particularly blue roofs with zero or a small total incline of the roof.

### Background for the invention

To reduce air-pollution, improve control and adjust the discharge flow of the water-recipient system, alter the sunray-reflecting and thermal emittance from roofs in inter alia city buildings and habitation complexes, it has become popular to equip or build houses in cities with so-called green roofs, i.e. roofs partially or completely covered with vegetation. The purpose of this use of vegetation is based on the circumstance that plants bind carbon dioxide emitted from industry and transportation and converts this gas into inter alia sugar through photosynthesis while simultaneously also assimilating other pollutants and improving the aesthetics of the buildings and also providing a shelter for insects and birds for thereby sustaining the biological diversity in environments that otherwise are more or less hostile to such creatures. The establishment of green roofs can also provide recreational locations for the population.

Additionally the establishment of green roofs normally improves the heat and sunray-reflective conditions of roofs as compared to conventional roofs made with external surfaces of shingle, tile, bitumen or synthetic material, such prior art material having a tendency to become hot when subjected to continuous sunshine. Also during times of intense rain, such prior art roofs do not present any capabilities for assimilating excess water, but will expel water through their drainage systems such as gutters, descending water-conducting pipes, etc. directly onto the roads or curbs below and occasionally overloading the drainage system for removing surplus water.

The water-storing capacity of green roofs is, although increased in relation to normal prior art roofs without any water-storing capacity, is not sufficient for assimilating water from heavy and/or continuous downpours. In heavy rainfalls there is a tendency for overloading the water-removal system for the area. This is particularly the case for old (older than from the year 2000) water removal systems built with dimensions that were not meant to handle the amounts of water that are collected by modern cities, and where water-drainage systems from buildings are connected directly onto such water-removal pipelines. One example of older water-removal pipelines is the sewage system in cities occasionally being connected directly to the water-expelling drainage system from ground surfaces (roads, walkways, recreational sites such as playgrounds, parks, parking lots, etc.). Alternatively densely populated areas with high-rise buildings are equipped with separate water-removal pipelines or systems emptying the collected rainwater into rivers, lakes or the sea, but such prior art water-collecting systems cannot in many cases be altered to get the necessary capacity for handling and removing the water from heavy and durable rainfalls. Also it is not always convenient to direct the water from rainfall to the sewer system since sewer normally is connected to sewer-handling facilities (sewage plants, purifiers, etc.) since this will occasionally or frequently overload the handling capacity of such facilities.

Consequently there exists a need for roofs that have an increased capacity for reducing the immediate or continuous water-flow into the public or private drainage systems. This may be accomplished by equipping the roofs with a system according to the present invention intended for postponing and reducing the immediate and long-term expelling of water into the water-removal systems.

Such reduction of the water-flow during heavy (exceeding 10 mm/hour) and/or prolonged (exceeding 3 hours) rainfall is not possible with buildings having roofs with a steep or normal incline (above 10° slope). One of the obvious reasons for this inability of normal and/or steep incline roofs to delay the expelling of water during heavy and/or prolonged downpours is that the roof or roof material needs to have an intermediate water-storing capacity forming a buffer or delaying system for the expelling of the stored water into the water-drainage system of the area. Consequently, one of the requirements for such an intermediate retention of water may be obtained with roofs with no or low-sloped incline (0-10° slope).

Green roofs including a water-absorbing material (growth medium) as well as soil in e.g. preen areas such as parks and the like, may delay the expelling of water from downpours into the water-handling system of the area (geological area occupied by the buildings erected in the area). However, when such water-absorbing materials have been saturated with water, they no longer possess this effect. This is one of the reasons why green roofs without any system for handling excess water beyond the water-absorbing capacity of the growth medium, do not perform adequately to delay the discharge of water during heavy and/or prolonged downpours. The same effect and problem will be observed in springtime during the thawing of ice having been retained by the growth medium during the winter season. Apart from representing a problem for the growths and the roof structure on account of ice-expansion effects, ice will in springtime also reduce the water-holding capacity of the growth medium and will also contribute with the water-saturation of the growth medium when it thaws.

Blue roofs according to the present invention include a discharge-delaying system for postponing or reducing the immediate or continuous discharge of water from the roofs and buildings of the area and into the water-drainage system of the area. As explained supra a blue roof represents a roof with no or a small incline for functioning as an intermediate water-basin or water-reservoir for retaining water to be expelled through the delaying system according to the present invention and further along to the water-handling system of the geographical area in question.

Additionally in relation to green roofs the inclusion of plants in roof structures is rife with separate problems such as coping with wilting of the plants and the growth of roots which may damage the underlying roof structure (see infra). The maintenance of water-storing roofs is thus much easier than the maintenance of green roofs. In this connection the structure and design of conventional roofs is not relevant because conventional roofs transport the water or precipitation from downpours immediately away from the roof. An alternative for green roofs is thus a roof that stores water intermittently as an open water reservoir creating a temporary open water body being carried by the roof structure. Such roofs are called blue roofs.

Roofs with a zero or small total incline (i.e. at an angle of up to 10° such as 0-5°, e.g. 1°, 2°, 3°, 4° or any incline there between) capable of storing water from downpours are in the present disclosure called roofs with flat or low-sloped structure, and such roofs may consist of purely blue roofs, purely green roofs and may also represent combinations of green roofs and blue roofs optionally alternating with water temporal reservoirs and growth medium for plants, and may even comprise a combination of conventional roofs, green roofs and blue roofs. One of the advantages with blue roofs, including a device according to the present invention, is that it is possible to convert an existing roof structure with flat or low-sloped structure into a blue roof structure without excessive restructuring of the roof construction.

The notion of total incline of a roof means the incline of the highest point of the external roof structure to the lowest point of the external roof structure. With external roof structure is meant the structure that carries the waterproof membrane and roof construction for blue roofs, the structure that carries the growth medium for green roofs and the total roof structure for conventional roofs.

In general the device according to the present invention may be used in roofs of zero or low-sloped structure intermittently optionally carrying a body of water wherein one object is to automatically adjust the water-level and water-flow from the roof into the water-handling system of the surrounding geographical area.

Due to global warming the weather prognosis for many geographical locations in the temperate zone will experience an increased amount of precipitation such as rainfall, sleet and snow. As an example the predictions for Norway is that at the end of the present century it has been calculated that the temperature in Norway will have been averagely elevated by between 3 to 6°C provided the expelling of climate gases still increases. The calculations additionally show that the precipitation also will increase in the future in Norway. The average precipitation (average yearly precipitation (mm/year)) in Norway has increased with about 18 percent since the year 1900, and the heaviest precipitation has been after 1980. It has been mainly the eastern districts that have experienced the heaviest precipitations and downpours with durations from one minute to one hour. The southern districts have experienced the heaviest rainfalls with durations for 1 to 6 hours, whereas the western districts dominate with durations from 12 hours and above. In other districts there may occur extremely powerful precipitations as well (NOU [Norwegian Public Information] 2015).

On account of the above-indicated situation and the additional benefits of roofs carrying live plants and vegetation (called green roofs), green roofs have been suggested as a solution for the predicted environmental difficulties. In addition to the aesthetic and practical benefits indicated supra, green roofs act as a reservoir for water on account of the water-binding capacity of the growth medium (earth/soil) being present on such roofs and acting as a "sponge" for storing and distributing water. However, this "sponge" effect is not altogether without problems. One of these problems arises with the situation where the growth medium does not provide sufficient run-off for the excess water. This will create a "swampish" environment which is detrimental for both the root lattice of the plants (over-watering), and the underlying strata of the roof. However, the growth medium for the plants should not get too dry either, since this will dry out the plants and kill them while converting the growth medium to a dry cake or dust, putting the integrity of the roof in jeopardy. It is thus necessary to control the moisture level on green roofs within operational parameters for optional growth of the relevant plants on the roof. Such operational levels are known to the person skilled in the art of plant cultivation (gardener) as well as the constructor/designer of the green roof. However, the water storing capacity of green roofs, although significant, is for the above disclosed heavy downpours and for tropical rainfall, not sufficient for delaying or reducing the overloading of the sewer system for carrying away the surplus water from a heavy downpour while also making it difficult to predict when the "sponge" effect becomes overloaded, and thus blue roofs are a better alternative than green roofs when it comes to water removal capacity and surveillance of the amount of "processed" water and the draining of the such water into the sewer system without overloading such systems.

### Figures

A better understanding of the above-indicated situation and problems will be obtained with reference to the accompanying figures wherein:
Fig. 1 depicts one embodiment of the assembly and structure of a "green roof".
Fig. 2 depicts a cross-section of an embodiment of a structure for a blue roof.
Fig. 3 depicts an exemplary embodiment of a low-sloped roof with a drainage pipe/assembly according to the present invention.
Fig. 4 depicts an exemplary embodiment of a restrictor/drainage pipe assembly according to the present invention.
Fig. 5 depicts an alternative embodiment of an assembly of a restrictor and drainage pipe/assembly according to the present invention.
Fig. 6 depicts an alternative embodiment of the construction of a blue roof including a possible location of a water level adjustment device/restrictor according to the present invention.
Fig. 7 depicts an embodiment of a blue roof construction with alternative locations for water removal ducts in the gutters and/or parapets in a roof with no or small incline.

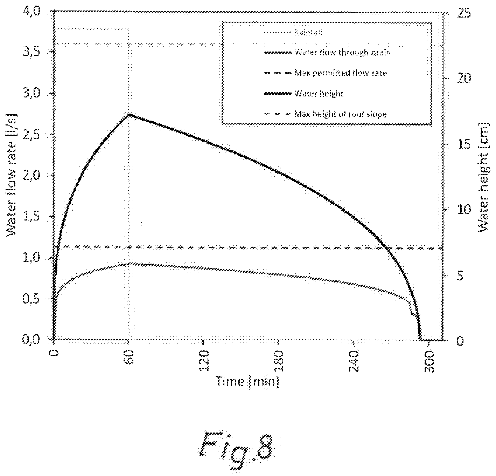

Fig. 8 depicts a graph illustrating the water-drainage postponing effect of a blue roof including the water drainage control system according to the present invention.

### Prior art

On cabins and recreational buildings (huts, log-cabins, historical settlement buildings, etc.) it has been known to establish turfed or peat roofs comprising a roof foundation of wood or bark and a lattice of struts carrying a layer of peat or turf forming a substrate for the growth of grass. This structure will, on account of its very large surface area formed by the grass leaves and the straw, provide a cooling function to the building and rooms below the roof much in the same way modern green roofs also function. The peat also forms a reservoir for keeping precipitation from pouring uncontrolled from the roof, but very little has been done to prevent the peat or turf material from becoming stagnant or rotten. If this happens, the prior art remedy has been to change the afflicted area of the roof or the whole roof. It is thus important to provide turfed or peat roofs as well as modern green roofs with appropriate drainage and airing systems or devices for not assimilating too much water while simultaneously maintaining an appropriate amount of water to ensure that the growing plants are getting enough water to thrive, grow and bloom.

Green roof constructions may loosely be divided into two groups:
1) Intensive roofs, i.e. roofs with a thick (10 cm and above) growth medium and
2) Extensive roofs with a relatively thin (<10 cm) growth medium.

The drawbacks of such roofs have in general been disclosed supra where one of these drawbacks is the inability of green roofs to delay the unrestricted discharge of water to the drainage system of the area once the growth medium has been saturated with water unless equipped with a restrictor system according to the present invention.

Alternatives to green roofs are blue roofs and conventional roofs. One of the main differences between blue roofs/conventional roofs and green roofs is the retaining of water in the growth medium in green roofs being largely avoided in blue roofs and conventional roofs where the roof surface between rainfalls is kept mainly dry.

From WO 2016/046571 A1, US patent 3469698 A and WO 2013/179022 A2 there are disclosed discharge restrictor systems for excess rainwater from green roofs and blue roofs. One of the disadvantages of such prior art restrictor systems is that such systems do not consider automatic adjustment of the outflow of water from the restrictors to the pipes or conductors leading the water to the soakaways or sewer system of the geographical location. Also such prior art systems do not contemplate clogging of the restrictors by debris such as leaves, twigs and branches or paper or plastic litter tending to be carried along by the water of the blue or green roof during downpours. A blue roof construction and a restrictor system is also disclosed in US patent 2016/0108621 A1 and GB patent application 2502515 A.

Another consideration to attend to when constructing modern roofs with flat or low-sloped structure of the roof (including green and blue ones) as well as conventional roofs, is that it is appropriate to include other constructional elements in the roof such as skylights, maintenance hatches, airing ducts etc. running from the inside of the building and through the roof. If the roof is to be used as a recreational area, the roof may also be added playground equipment such as see-saws, swings, labyrinths, etc. and/or larger constructional elements such as swimming pools. If such devices and elements are included in green roof constructions, they are isolated from the growth medium of the plants. The way to do this is known in the art. For blue roofs such equipment needs to have access hatches passing through the intermediate and temporal water body and will preferably, alternatively and optionally also be connected to gangways or other structures making it possible to access the roof without having to drain the entire water body from the roof. However it will optionally also be a possibility to drain the water from the roof to access the external roof layer and other constructions included in the roof, e.g. for maintenance and/or repair purposes. This will normally not be a problem, though, since blue roofs for extensive time intervals (between rainfalls when the restrictor system according to the invention has had time to remove the water from the roof) are dry.

For blue roofs it is of importance to regulate the amount of water possibly being carried by the underlying roof structure and construction creating a supporting deck for the water mass for not overloading said roof carrying structure. The amount of water to be carried by a blue roof is calculated from an estimation of the maximum load to be carried by the underlying roof structure. Excess water could be allowed to pour from the edges of the roof, but this would remove control of the down-splash from the roof, forming a possible hazard for persons directly below said down-splash site, and thus it is of importance to establish a device for removing excess water from blue roofs as well as green roofs and/or automatically controlling the water flow from such roofs. Furthermore, GB936687A describes a system for draining water according to the preamble of claim 1.

### General disclosure of the invention

As discussed supra it is important to control the drainage of water from the growth medium/soil in green roofs as well as ensuring an appropriate airing or the growth medium to obtain a roof wherein the growth material/soil provides optimal conditions for the growth of plants. For blue roofs, it is of importance to adjust and maintain an optimal water drainage inter alia for not overloading the carrying capacity of the underlying carrying structures (supporting deck, insulation, membranes, etc.) while at the same time controlling the water drainage during a downpour for not overloading the receiving water handling and/or sewer system. According to the prior art, for green roofs this has been done by providing a drainage/storage layer inside the green roof structure comprising a studded and possibly waterproof membrane between the insulation and the growth medium for the plants (see the disclosure infra). A drainage system for excess water is, however, required for green roofs as well as for blue roofs both because heavy rainfall may overload the capacity of the growth medium/soil to accumulate water for green roofs and also because green roofs in dry periods require watering, and excess watering may inadvertently occur. For blue roofs control of the maximum water drainage rate is also required (see supra).

### Green/blue roofs

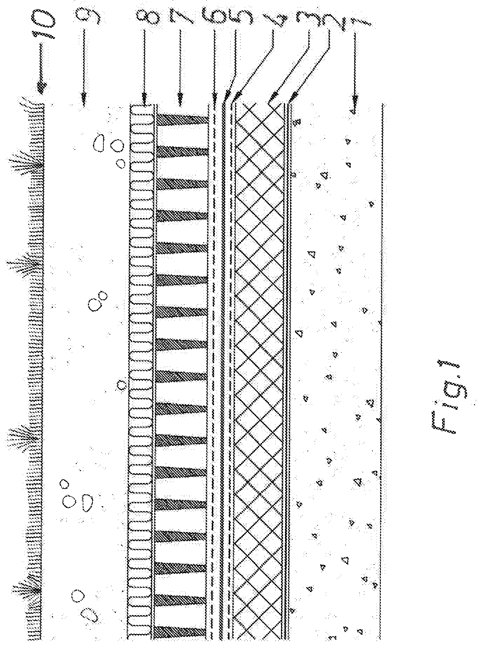

With reference to Fig. 1 a green roof may in one embodiment be carried by a structural support 1 representing the roof foundation onto which the additional layers of the green roof cover may be placed. On top of this structural support 1 there is optionally located a vapor control membrane 2 protecting the structural support 1 and possibly also being part of an insulation layer 3 providing thermal, moisture and physical protection for the structural support layer 1. Beneath the structural support 1 the roof may comprise airing passages and/or a carrying lattice of struts for carrying the structural support 1 as well (not shown). Normally the roof will be heated indirectly from the hot air being carried upwards through convectional heat exchange from the rooms below. It is consequently of essence that the roof construction including the vapor control membrane 2 as well as the structural support 1 including the thermal insulation layer 3 is assembled for avoiding excessive heat loss to the surroundings through the roof structure while also ensuring control of condensation that may occur between cold surfaces and the surrounding air, particularly air carrying large water vapor content (also being dictated by the temperature of the air). The calculation of such an isolation capacity is known the person skilled in the art. This consideration is also relevant when considering the insulation of blue and green roofs being at least temporarily located underneath a water body or soaked growth medium, since the water mass normally will constitute a body with lower temperature than the surroundings and may promote condensation of moisture on the surfaces adjacent the layer(s) carrying water unless sufficiently thermally (and optionally also waterproof) isolated. For preventing such moisture to form or collect the roof structure shown in the embodiment of Fig. 1 additionally carries an air migration barrier 4. On top of the migration barrier 4 there is located a waterproof barrier 5. This waterproof barrier layer 5 isolates the substructures comprising the supporting structure 1, the vapor control barrier 2 and the migration barrier 4 from the superstructure above this waterproof layer 5. Above the waterproof layer 5 there is located a protective layer 6 preventing membrane from puncturing and cracking In the embodiment of a green roof structure depicted in Fig. 1, a sliding protection layer 6 is located on top of the waterproof layer 5, and on top of this sliding protection layer 6 there is located a water reservoir layer 7 optionally associated with a water basin under circumstances including a heavy water burden (heavy rainfall of excessive watering of the plants carried by the green roof). On top of the entire green roof structure there is located a plant growth medium 9 such as soil, turf, peat, or other type of growth medium known to the person skilled in the art or any combination of such growth media carrying live plants or growths 10.

One of the problems associated with this construction of green roofs is ensuring appropriate drainage from a growth medium layer 9 located as the top layer of the green roof structure depicted in Fig. 1 also including an optional water basin layer 8, onto the drainage layer/reservoir 7. Drainage conduits have conventionally been included in the growth medium layer 9 but such drainage conduits have previously not been adjustable to provide a water surface in the growth medium ensuring that surplus water is conducted at all times onto the drainage/reservoir layer 7. Particles such as silt, peat, plant parts (bark, leaves, twigs, etc.) may also be carried away from the growth medium layer 9 onto the drainage/reservoir layer 7 if open tubes or cylinders are used as such water conduits. Thus the present invention is also concerned with the structure and assembly of such conduits providing them with filters, crude or fine and other structures that will prevent the conduits to become clogged with loose material of the kind mentioned supra.

When water is added to a porous medium such as a growth medium 9 there are two main effects concerning the water distribution in the medium that need to be taken into consideration. Firstly, as long as the porous medium 9 is not saturated with water, i.e. the porous material 9 is still capable of assimilating water, there will be present capillary action transporting the water throughout the pores in the porous material 9. This action will draw water from layers 7,8 below the porous growth medium 9 as long as the porous growth medium 9 is in contact with such water. This is one of the functions of wells/cups included in the reservoir drainage/storage layer 7, if indeed the some or all of the studs in this layer are formed in such a way. Secondly, when the porous material 9 is saturated with water, any additional water added to this medium 9 will form a water surface rising though the porous material 9 until the porous material is submerged in water. These two effects will act simultaneously as long as there is present a sufficient amount of water in the porous growth medium layer 9 to allow a water surface to be formed. These effects act in addition to the wicking action of possible viable roots being present in the growth medium 9 transporting water to the plants 10 growing on the green roof. Water is consumed by the plants both through growth and through evaporation of water through the foliage/leaves of the plants, contributing to lowering the water surface/water content of the growth medium 9 in addition to evaporation of water from the surface of the growth medium 9 per se.

A dry infrastructure below the waterproof barrier layer 5 comprising the structural support 1 the vapor control membrane 2 and the insulation 3 as well as the migration barrier layer 4 is encouraged to avoid damage to the roof foundation through the growth of mould and/or rot in the bearing structures of the roof, something which could also be a problem with the construction of blue roofs unless sufficient water-proofing and thermal insulation is included in the roof structure.

In one embodiment of roofs with flat or low-sloped structure according to the present invention, the function of the waterproof membrane 5 may in one alternative embodiment be carried out by one waterproof membrane being placed directly onto the roof structural support 1. Such a membrane may include a layered sheet being a combination of the above disclosed layers or at least performing the same tasks. A porous sheet material covered at least on one side with a waterproof surface and placed on top of the supporting deck 1 may be used for this purpose.

In the case of green roofs the reservoir layer 7 may carry a water basin 8 and the growth medium 9 for harboring plants, roots, and seeds. The roots from the plants in the top layer 10 may collect water and nourishment from the water basin 8 and the reservoir layer 7, and the water basin 8 may also provide moisture to the growth medium 9 through capillary action of the growth medium 9.

Such an elaborate structure is not needed in blue roofs since blue roofs are normally dry or at least semi-dry between rainfalls or thawing periods. One of the purposes of blue roofs according to the present invention is, as stated supra, to control the speed of the run-off from roofs with flat or low-sloped structure for avoiding overload of the water-collecting system or sewer system of the nearby area.

In general for most types of roofs including membranes if membrane layers comprise two or more membrane sheets secured to each other via their edges, such membrane sheets may be secured to each other in a water-proof manner by welding and/or gluing and/or taping and/or melting. Tar material being both waterproof and adhesive at temperatures above 5°C, optionally in the form of pre-located overlapping sections in the edge areas of the relevant sheet, further optionally forming reciprocating areas fitting to each other or being formed as double-sided tape strips, may be used. An overlap section between sheets may include an area running along parts of or the entire edge length of the sheet and about 1-50 mm into the edge of each sheet. The edges of the overlap section between sheets may also be strengthened by the addition of e.g. tape as appropriate.

Above the sliding protection layer 6 there is in green roofs located a drainage/ reservoir layer 7 for water. The drainage/reservoir layer 7 comprises in one embodiment at least one studded plate made of a water-repellant/waterproof material. Studs in this layer may comprise cups and/or wells with their openings facing skywards or substantially vertically upwards for storing water seeping down from the strata above and/or solid studs for creating drainage paths for the water to be passed through. The drainage/reservoir layer 7 is one of the layers of the green roof structure that receives the heaviest direct or indirect water load, and draining conduits may be present in the strata above opening downwards onto this drainage/reservoir layer 7. In one embodiment the draining conduits comprise draining conduits according to the present invention and may expel surplus water onto this storage/reservoir layer 7 for leading excess water from the upper layers/ strata of the roof (i.e. layers/strata located above the storage/reservoir layer 7) onto this storage/reservoir layer 7 and to be passed from this layer 7 towards drainage scuppers/drainage tubes/gutters located at the horizontal edges of the roof. The form and size of the studs and cups is normally not critical, but it is preferred that they have a circular cross-section with a diameter within the interval from about 0.5 cm to about 5.0 cm and a height of up to about 20 cm. The distance between the studs/cups lies preferably within the same interval as the diameter of the studs/cups, and these structures are preferably evenly distributed across the layer 7.

In green roofs the drainage/reservoir layer 7 supports and lies beneath layers 8,9 including a water basin 8 and a growth medium 9 for plants (soil, peat, turf, compacted soil, sand, plant nutrients supporting materials or mixtures thereof). This growth medium layer 9 supports the growth of roots and functions as a securing medium for the plants growing from this growth medium layer 9. The roots from the plants growing in the growth medium layer 9 may penetrate from the underside of the growth medium layer 9 into the water basin 8 and the cups of the reservoir layer 7, but may not perforate or penetrate the surface of this drainage/reservoir layer 7. Plants 10 that may be present in green roofs may be of any kind from grasses and decorative plats to trees, and may provide shelter for wildlife such as insects and birds as well as provide a recreational area for inhabitants of the appropriate building or other tenants in the area.

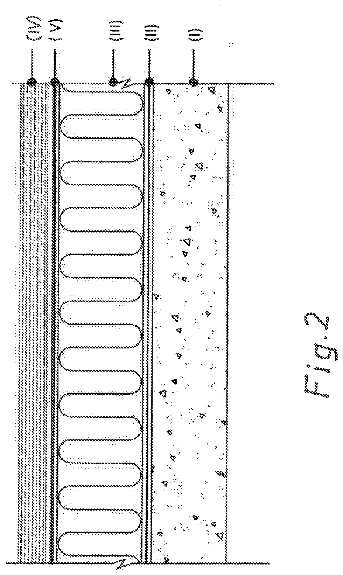

Referring to Figure 2, the construction of blue roofs is not as elaborate as the construction of green roofs. In blue roofs, a vapor control layer II is located on top of a support deck I. The support deck I may constitute the carrying structure of the roof. One possible material for such a supporting deck I may be concrete, reinforced concrete, metal, rust-free steel, or combinations thereof. On top of the vapor control layer II there is located a thermal insulation layer III. The thermal insulation layer III ensures control of condensation not occurring between the upper surface of the vapor control layer III and the supporting deck I isolating the substructures I, II from a cooler water body IV carried intermittently by the blue roof. In the blue roof structure shown in Fig. 2 a waterproof membrane V is placed between the intermittent body of water IV and the insulation III. A roof construction may, in addition to the layered structure accounted for supra, comprise a supporting deck I constructed with a main carrier structure and a secondary carrier structure. The secondary carrier structure may e.g. comprise beams or girders carrying the roof deck, the roof deck being the main carrier structure for the roof. Materials selected for such main and secondary carrier structure may be different or the same, depending on the required weight, load or strain to be carried by the roof. Alternative selections for primary and secondary roof construction materials may be summarized by the table infra

| | Secondary load bearing structure | Concrete | Steel | Wood |
|---|---|---|---|---|
| Main load bearing structure | | | | |
| Concrete | | X | X | X |
| Steel | | X | X | X |
| Wood | | X | X | X |

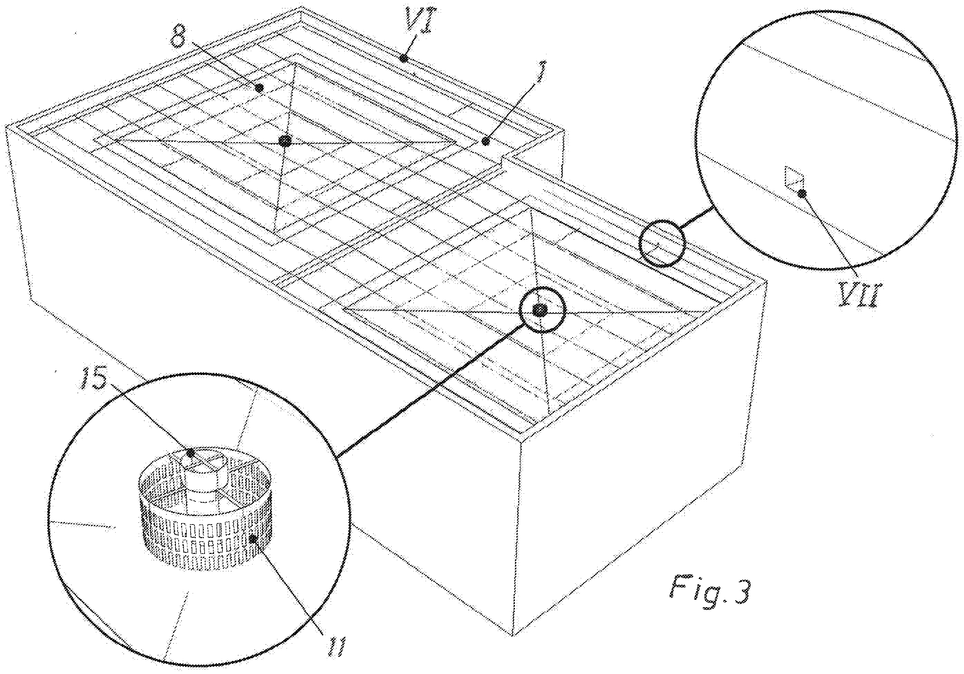

The problem of ensuring that a maximum weight and volume of water carried by the roof structure is not exceeded even in heavy downpours is solved by the restrictor device according to the present invention. This problem is remedied by placing an automatic water-discharge-adjusting device or system according to the present invention at one or optionally a number of low points in the roof structure. This location is illustrated in Figs. 3, 6 and 7 showing a device or system α according to the present invention located at a depression in the insulation material III. The device/system according to the present invention is connected to drain pipes, spouts and/or gutters of the relevant building or even to auxiliary drain pipes. Such water-conducting pipes may also be present in green roofs, and a system of water-conducting pipes inclined towards the gutter or located at outlets in the roof or walls of the building, preferably being connected to the regular gutters and gutter pipes of the roof, connected to the outlet of the water-level-controlling and water discharge rate-controlling device according to the invention, may be included in a system for controlling and adjusting the water-level and water discharge rate in both green and blue roofs. Such water-pipe systems may be included as a conventional element in new buildings, and may be added as an auxiliary system in regular building being converted to blue or green roof buildings.

If a green roof is combined with an intermittent water reservoir such as provided by a blue roof, the water carried by the blue roof may be transported to the green roof e.g. through an irrigation system carrying water from the intermittent water reservoir of the blue roof to the soil 9 of the green roof. Alternatively or additionally water may be transported directly to the upper surface of the studded membrane/water reservoir 7 of the drainage/reservoir layer 7 of the green roof for filling the cups carried by this layer.

### Blue roofs

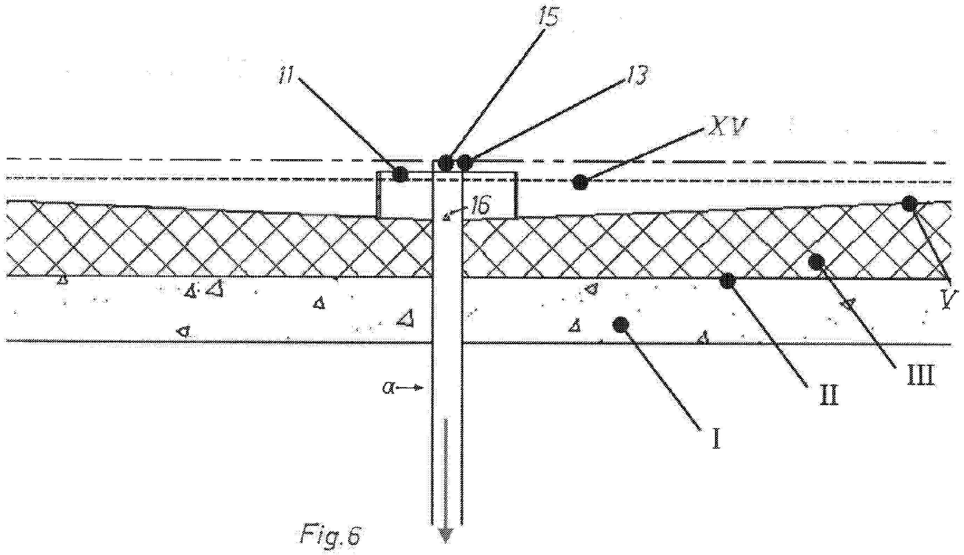

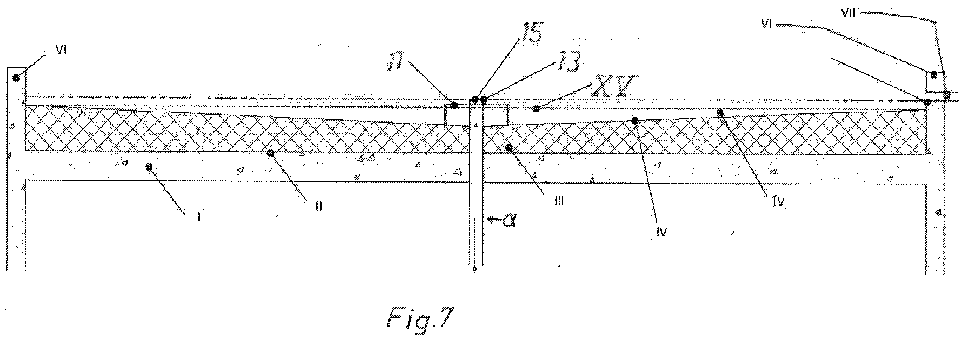

Restrictors are placed in blue roofs for controlling/adjusting the water flow rate from the surface of the roof with no or small incline. An example of a possible construction of a blue roof structure is shown in Figs. 6 and 7. In the embodiment of a blue roof structure depicted in Figs. 6 and 7, showing a cross section of a blue roof structure, the roof supporting structure or supporting deck I, is carrying the layers and structures above. On top of this carrying structure I, being made of a solid material such as concrete, reinforced concrete, metal/steel plates, wood, etc., there is located a vapor control layer II.

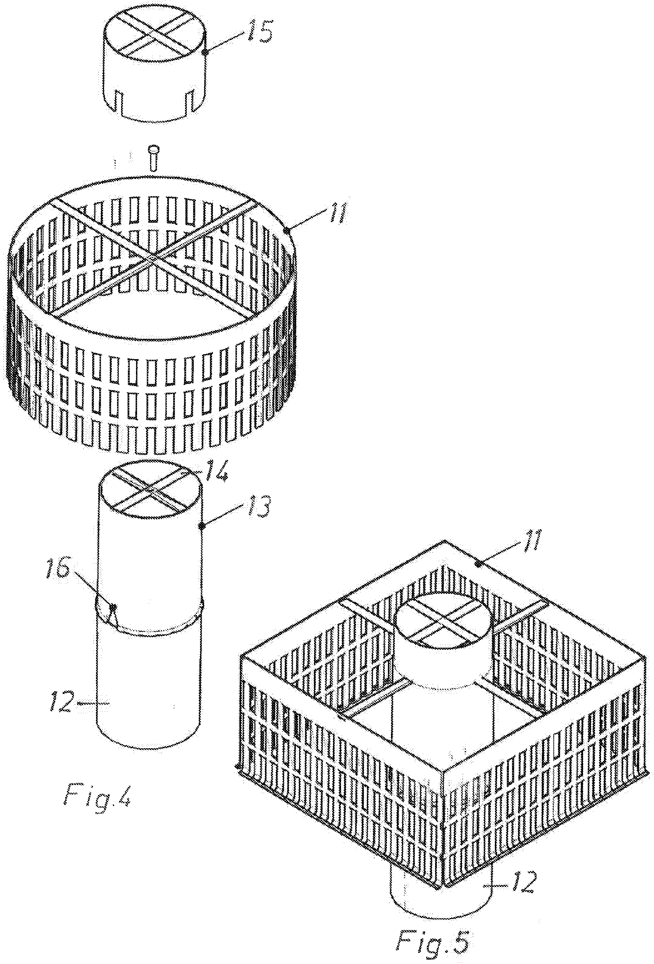

Alternative embodiments of restrictors according to the present invention are shown in Figs. 4 and 5.

A restrictor construction according to the present invention comprises a crude filter 11 called a leaf grate surrounding a pipe 12 for leading water to the water drainage system of the area.

In one embodiment of the invention the pipe/conduit 12 is assembled with a pipe top section 13 called a restrictor, and this assembly may optionally include internal stays or struts 14 for strengthening the pipe/conduit of the restrictor assembly. In one embodiment the cross section of the pipe/conduit 12 of the restrictor assembly is circular. However the cross-sectional shape of the conduit 12 may also have other forms such as oval, polygonal, square, pentagonal, hexagonal, etc. An extension 15 may in one embodiment be placed on top of the pipe top section 13 of the restrictor assembly according to the invention for extending the height of the top of the restrictor assembly above the surface of the roof. Instead of placing an extension 15 on top of the conduit 12,13 for extending the length of this pipe conduit as explained supra, the conduit 12 may alternatively or additionally be constructed by telescoping parts or sections. In such an embodiment the length of the pipe/conduit of the restrictor 13 may be extended to up to the double of its length, and the extension may be conducted stepwise or step-less i.e. continuously.

The pipe/conduit of the restrictor 13 carries one aperture/hole/opening 16 opening into the interior of the restrictor 13. Such an aperture 16, will by its location, define the height of the water level carried by the roof. In blue roofs, the excess water will be drained through the aperture 16 into the restrictor(s) 13 and removed through the building's gutters or drainage pipes. The aperture 16 will normally lie at the surface of the roof for continuously removing water at a controlled rate to the drainage pipe system/sewers of the area. With only one aperture 16 being present at the circumference of the restrictor 13 it will be easier to inspect the clogging of the aperture 16, and clean the aperture 16 if need The available square area of the aperture 16 is dependent on the kind and amount of blocking debris passing through the filtering grate system 11 surrounding the restrictor 12,13. A restrictor with more than one aperture does not fall under the scope of the invention.

The system of the invention comprises a restrictor including only one aperture (16) in a triangular shape with the apex pointing upwards. The reason for this orientation of the triangular opening 16 is that although the crude filter 11 prevents larger objects such as root fragments, branches, leaves, etc. from entering the area around the pipe/conduit and restrictor 12,13, smaller debris and objects such as silt, clay particles, rootlets, etc. may pass the openings in the crude filter 11, and a broader bottom edge in the opening/aperture 16 will allow liquid/water to pass easier into the interior of the pipe/restrictor 12,13 through the aperture 16 even if parts of it have been blocked by the smaller debris mentioned supra.

If the restrictor assembly 12,13 is made of telescoping parts the telescoping parts should not cover the aperture 16. This could be accomplished by the telescoping parts having corresponding longitudinally elongated holes or the telescoping parts being equipped with stoppers ensuring that the telescoping parts do not cover said aperture 16.

The construction of the assembly restrictor/crude filter/apertures allows simple cleaning of the assembly and even an assembly that is essentially self-cleaning and maintenance-free.

For geographical zones having temperatures below zero degrees Celsius during the winter season, blue roofs may here be equipped with heating elements and/or defrosting devices for keeping the water in a liquid state suitable to be transported away by the restrictors according to the present invention. If present, the heating elements may heat the entire roof or just the draining pipes and restrictor(s). Such defrosting devices are, however, not required, since it may be possible for a blue roof to carry precipitation in the form of snow through the winter until the snow thaws and turns into water during the spring. To avoid ice expansion damages to the blue roof, if it is anticipated that the water will turn completely or partially to ice due to a drop in the temperature to below zero degrees Celsius, and also to drain the water away for maintenance purposes, the openings/apertures 12 of restrictors in the blue roof may be located at the surface or very near (1-10 mm) the surface of the substantially flat roof with no or small incline.

The materials to be used for the assembly/restrictor according to the present invention is inter alia selected from metals, preferably metals of light weight such as aluminium, metals that are corrosive-resistant/rust-free such as steel, rust-free steel, cast steel, hardened steel or alloys of such metals, or alternatively plastic materials such as hard plastic types, e.g. polyethene (PE), polyvinylchloride (PVC), polyurethane (PU), etc. or combinations thereof, preferably stainless steel, polypropylene (PP), polyamide (PA), ABS or also elastomeric materials or any combination of such materials.

### Example

This example relates to the postponement of the total expelling of water from a blue roof illustrated in Figure 9. The relevant roof had an area of 190.6 m² carrying a maximum water volume of 32.6 m³ at a water level height of 171 mm with water draining outlets according to the invention at a density of 4 pipes distributed evenly over the area of the roof. The drainage pipes had a diameter of 10 cm equipped with two opposite triangular outlet apertures each with an outlet area of 2 cm² (2 cm base line and 2 cm in height) in the same plane as the roof surface. This arrangement of water draining outlets is able to transport a water volume of at least 5 liters per second using gravity for removal of water through the draining outlets. This example shows that a blue roof constructed as explained supra carries away water added through a heavy downpour supplying 3 l/sec to the roof at its peak at 60 minutes. The removal of water during the period of rain is held and reduced to a period of 232 mins. The main amount of water was absorbed by the blue roof and drained away at a controlled pace to the sewers.

## Claims

1. System for draining water from a roof or partial roof construction with flat or low-sloped configuration, the system comprising a vertically upright restrictor (12,13) comprising a hollow conduit to be located at a lowest point in said roof or partial roof construction for draining water from said roof or partial construction, said restrictor (12,13) including one and only one aperture (16) for limiting or restricting the transportation of water to drainage pipes through said aperture (16), said aperture (16) defining the maximum water flow of the water mass collected by said roof or roof construction,
**characterized in that** the one aperture (16) has the form of a triangular aperture with its apex pointing upwards.

2. System according to claim 1,
**characterized in that** said restrictor (12,13) is surrounded by a leaf grate (11) for preventing crude debris from clogging said aperture (16).

3. System according to claim 1 or 2,
**characterized in that** said restrictor (12,13) is present in the form of a cylindrical pipe.

4. System according to any of the preceding claims,
**characterized in that** said restrictor (12,13) comprises an optional extension part (15) for elongating said restrictor (12,13).

5. The use of a system according to any of the claims 1 to 4 in a roof or partial roof construction with zero or low inclination.

6. The use according to claim 5, wherein said roof or partial roof construction is a green roof, a blue roof, an exposed roof or a membrane sectional roof or combinations thereof.

7. The use according to any of the claims 5 or 6, wherein said roof or partial roof construction is a part of a building.

## Patentansprüche

1. System zum Ableiten von Wasser von einer Dach- oder Teildachkonstruktion mit flacher oder niedrig geneigter Konfiguration, wobei das System einen vertikal aufrechten Begrenzer (12, 13) umfasst, der einen hohlen Kanal umfasst, der an einem niedrigsten Punkt in der Dach- oder Teildachkonstruktion zum Ableiten von Wasser aus der Dach- oder Teilkonstruktion anzuordnen ist, wobei der Begrenzer (12, 13) eine und nur eine Öffnung (16) zum Begrenzen oder Einschränken des Transports von Wasser zu Ableitungsrohren durch die Öffnung (16) beinhaltet, wobei die Öffnung (16) den maximalen Wasserfluss der Wassermasse definiert, die von dem Dach oder der Dachkonstruktion gesammelt wird,
**dadurch gekennzeichnet, dass** die eine Öffnung (16) die Form einer dreieckigen Öffnung mit ihrem Scheitelpunkt nach oben weisend aufweist.

2. System nach Anspruch 1,
**dadurch gekennzeichnet, dass** der Begrenzer (12, 13) von einem Blattgitter (11) umgeben ist, um zu verhindern, dass die Öffnung (16) durch groben Schmutz verstopft.

3. System nach Anspruch 1 oder 2,
**dadurch gekennzeichnet, dass** der Begrenzer (12, 13) in der Form eines zylindrischen Rohres vorhanden ist.

4. System nach einem der vorstehenden Ansprüche,
**dadurch gekennzeichnet, dass** der Begrenzer (12, 13) ein optionales Verlängerungsteil (15) zum Verlängern des Begrenzers (12, 13) umfasst.

5. Verwendung eines System nach einem der Ansprüche 1 bis 4 in einer Dach- oder Teildachkonstruktion mit null oder niedriger Neigung.

6. Verwendung nach Anspruch 5, wobei die Dach- oder Teildachkonstruktion ein Gründach ("Green Roof"), ein Blaudach ("Blue Roof"), ein freiliegendes Dach oder ein Membranprofildach oder Kombinationen davon ist.

7. Verwendung nach einem der Ansprüche 5 oder 6, wobei die Dach- oder Teildachkonstruktion Teil eines Gebäudes ist.

## Revendications

1. Système destiné au drainage d'eau d'une toiture ou construction partielle de toiture avec une configuration plate ou à faible pente, le système comprenant un restricteur dressé verticalement (12, 13) comprenant un conduit creux destiné à être situé au niveau d'un point le plus bas dans ladite construction de toiture ou de toiture partielle pour le drainage d'eau de ladite toiture ou construction partielle, ledit restricteur (12, 13) incluant une et seulement une ouverture (16) pour limiter ou restreindre le transport d'eau vers des tuyaux de drainage au travers de ladite ouverture (16), ladite ouverture (16) définissant le débit maximal d'eau de la masse d'eau collectée par ladite toiture ou construction de toiture,
**caractérisé en ce que** cette ouverture (16) a la forme d'une ouverture triangulaire avec son sommet dirigé vers le haut.

2. Système selon la revendication 1,
**caractérisé en ce que** ledit restricteur (12, 13) est entouré d'une grille à feuilles (11) pour empêcher des débris bruts de boucher ladite ouverture (16).

3. Système selon la revendication 1 ou 2,
**caractérisé en ce que** ledit restricteur (12, 13) est présent sous la forme d'un tuyau cylindrique.

4. Système selon l'une quelconque des revendications précédentes, **caractérisé en ce que** ledit restricteur (12, 13) comprend une partie d'extension facultative (15) pour allonger ledit restricteur (12, 13).

5. Utilisation d'un système selon l'une quelconque des revendications 1 à 4 dans une toiture ou construction partielle de toiture avec une inclinaison nulle ou faible.

6. Utilisation selon la revendication 5, dans laquelle ladite toiture ou construction partielle de toiture est une toiture verte, une toiture bleue, une toiture exposée ou une toiture modulaire à membrane ou des combinaisons de celles-ci.

7. Utilisation selon l'une quelconque des revendications 5 ou 6, dans laquelle ladite toiture ou construction partielle de toiture fait partie d'un bâtiment.
